# EUROPÄISCHE PATENTSCHRIFT

(11) **EP 2 376 798 B1**
(45) Veröffentlichungstag und Bekanntmachung des Hinweises auf die Patenterteilung: **22.08.2012**
(21) Anmeldenummer: 10767977.1
(22) Anmeldetag: 06.10.2010
(51) Int. Cl.: F16C 25/08, F16C 37/00

(54) **VAKUUM-WÄLZLAGERANORDNUNG SOWIE VAKUUMPUMPE**
VACUUM ROLLER BEARING ARRANGEMENT AND VACUUM PUMP
PALIER À ROULEMENT SOUS VIDE AINSI QUE POMPE À VIDE

(30) Priorität: 09.10.2009 DE 202009013629 U
(43) Veröffentlichungstag der Anmeldung: 19.10.2011
(73) Patentinhaber: Oerlikon Leybold Vacuum GmbH, 50968 Köln (DE)
(72) Erfinder: ENGLÄNDER, Heinz, 52441 Linnich (DE)
(74) Vertreter: von Kreisler Selting Werner
(86) Internationale Anmeldenummer: PCT/EP2010/064879
(87) Internationale Veröffentlichungsnummer: WO 2011/042452

(56) Entgegenhaltungen:
- DE-A1- 19 946 383
- DE-A1-102006 059 845
- JP-A- 2003 172 288
- US-A- 3 326 613

## Beschreibung

Die Erfindung betrifft eine Vakuum-Wälzlageranordnung, die insbesondere für Vakuumpumpen wie Turbomolekularpumpen geeignet ist. Ferner betrifft die Erfindung eine Vakuumpumpe, insbesondere eine Turbomolekularpumpe mit einer derartigen Vakuum-Wälzlageranordnung.

Die Lagerung, beispielsweise von Rotorwellen einer Vakuumpumpe kann über Wälzlager erfolgen. Hierbei kann im Bereich des Lagers Vakuum herrschen. Häufig sind Wälzlager von Vakuumpumpen Drücken von weniger als 10⁻¹mbar ausgesetzt. Bereits aufgrund des herrschenden Vakuums wird das Schmiermittel stark beansprucht, wodurch die Lebensdauer verringert wird. Ferner herrschen im Bereich des Wälzlagers relativ hohe Umgebungstemperaturen. Dies liegt insbesondere darin begründet, dass im Vakuum eine schlechte Wärmeabfuhr in das Gehäuse erfolgt. Die im Lager entstehende Temperatur ist insbesondere bei vorgespannten Lagern aufgrund der auftretenden höheren Reibung kritisch. Bei bekannten Vakuumpumpen, die über Wälzlager gelagert sind, erfolgt die Wärmeabfuhr insbesondere bei vorgespanntem Lager in erster Linie über die Vorspannfeder oder die eher isolierenden O-Ringe (Dämpfungsringe). Die hierdurch erzielbare Wärmeabfuhr ist relativ gering, so dass die Lebensdauer des Lagers, insbesondere auch aufgrund der Temperatureinwirkungen beschränkt ist.

Zur Vermeidung des Nachteils der begrenzten Lebensdauer von Wälzlagern aufgrund der Temperatureinflüsse ist es bei Vakuumpumpen bekannt Magnetlager vorzusehen. Diese sind jedoch aufwändig und teuer.

Aufgabe der Erfindung ist es eine Vakuum-Wälzlageranordnung, die insbesondere für Vakuumpumpen geeignet ist mit besserer Wärmeabfuhr zu schaffen.

Die Lösung der Aufgabe erfolgt erfindungsgemäß durch eine Vakuum-Wälzlageranordnung gemäß Anspruch 1 bzw. eine Vakuumpumpe mit einer derartigen Vakuum-Wälzlageranordnung gemäß Anspruch 9.

Die erfindungsgemäße Vakuum-Wälzlageranordnung ist insbesondere zur Lagerung von Rotorwellen von Vakuumpumpen, insbesondere Turbomolekularvakuumpumpen geeignet. Die Wälziageranordnung weist ein Wälzlager mit einem Lageraußenring auf. Der Lageraußenring umgibt die Wälzkörper, wobei das Wälzlager zusätzlich gegebenenfalls einen Lagerinnenring aufweist. Dieser kann gegebenenfalls entfallen bzw. durch die Rotorwelle selbst ausgebildet sein. Insbesondere handelt es sich bei dem Wälzlager um ein herkömmliches handelsübliches Wälzlager. Ferner weist die Vakuum-Wälzlageranordnung eine Haltehülse auf, die zwischen dem Lageraußenring und einem Gehäuseelement angeordnet ist. Bei dem Gehäuseelement handelt es sich um ein wärmeabführendes Bauteil, wobei es sich auch um ein mit dem Gehäuse verbundenes Zwischenelement handeln kann, so dass die Haltehülsen nicht unmittelbar, sondern mittelbar mit dem Gehäuseelement verbunden ist. Zur Verbesserung der Wärmeabfuhr weist die Haltehülse einen Ansatz auf, so dass eine an dem Gehäuseelement anliegende bzw. diesem zugewandte Wärmeübertragungsfläche ausgebildet ist. Zwischen dem Ansatz der Haltehülse und dem Gehäuseelement ist vorzugsweise Lagerfett und/ oder eine Wärmeleitpaste zur Gewährleistung einer guten Wärmeübertragung vorgesehen.

In besonders bevorzugter Ausführungsform erfolgt ein Vorspannen oder Fixieren des Lagerrings nicht unmittelbar durch die Haltehülse. Die Haltehülse kann allenfalls beispielsweise zur Übertragung einer Federkraft auf den Lageraußenring genutzt werden. In bevorzugter Ausführungsform ist zwischen dem Ansatz der Haltehülse und dem Gehäuseelement ein Schlitz vorgesehen. In bevorzugter Ausführungsform liegt der Ansatz der Haltehülse somit nicht unmittelbar an dem Gehäuseelement an. Vorzugsweise kann der Schlitz oder Spalt zur Wärmeübertragung mit einer Wärmeleitpaste gefüllt sein, um eine verbesserte Wärmeübertragung zu dem Gehäuseelement zu gewährleisten.

Der Ansatz ist vorzugsweise, bezogen auf die Rotationsachse des Wälzlagers, radial ausgerichtet. Der in besonders bevorzugter Ausführungsform einstückig mit der Haltehülse ausgebildete Ansatz ist in bevorzugter Ausführungsform ringförmig ausgebildet. Selbstverständlich könnten auch mehrere sodann beispielsweise sternförmig angeordnete radial insbesondere nach außen weisende Ansätze vorgesehen sein. Auch ein einzelner, insbesondere ringförmig ausgebildeter Ansatz ist in bevorzugter Ausführungsform nach außen gerichtet. Dies hat den Vorteil, dass auf einfache Weise im Inneren der Haltehülse beispielsweise ein Anstellelement wie eine Feder für den Lageraußenring angeordnet werden kann.

Um eine möglichst gute Wärmeübertragung zu gewährleisten, ragt der Ansatz in eine Nut. Hierbei ist die Nut vorzugsweise derart ausgebildet, dass eine weitere Wärmeübertragungsfläche, die der ersten Wärmeübertragungsfläche vorzugsweise gegenüberliegend ist, ausgebildet ist. Aufgrund der Vergrößerung der gesamten Wärmeübertragungsfläche kann die in dem Wälzlager entstehende Wärme besser in das Gehäuse bzw. ein mit dem Gehäuse verbundenes Gehäuseelement abgeleitet werden.

In bevorzugter Ausführungsform ist die Nut durch einen Gehäusedeckel und ein Gehäusebauteil bzw. das Gehäuseelement selbst gebildet. Das Gehäusebauteil bzw. das Gehäuseelement weist eine nach außen offene Ausnehmung auf, wobei zur Ausbildung der Nut diese sodann mit einem Gehäusedeckel verschlossen wird. Dies hat den Vorteil, dass in die Ausnehmung des Gehäuses die Haltehülse von außen auf einfache Weise eingesetzt werden kann und die Nut sodann durch Verschließen des Gehäuses mittels des Gehäusedeckels erzeugt wird.

Bei einer weiteren bevorzugten Ausführungsform der erfindungsgemäßen Haltehülse weist diese zusätzlich mindestens einen insbesondere rippenartig ausgebildeten Fortsatz auf. Der oder die Fortsätze sind vorzugsweise einstückig mit der Haltehülse ausgebildet. Durch das Vorsehen mindestens eines Fortsatzes kann eine weitere Vergrößerung der gesamten Wärmeübertragungsfläche und somit eine bessere Wärmeabfuhr erreicht werden. Die insbesondere rippenartig ausgebildeten Fortsätze ragen vorzugsweise in Ausnehmungen des Gehäuseelements. Dies hat den Vorteil, dass die Fortsätze im Wesentlichen vollständig von dem Gehäuseelement umgeben sind und somit eine gute Wärmeabfuhr gewährleistet ist. Die Ausnehmungen können ferner auch in dem Gehäusedeckel oder einem anderen Bauteil vorgesehen sein, so dass die Fortsätze beispielsweise in Ausnehmungen des Deckels ragen. Selbstverständlich ist auch eine Kombination dieser Ausführungsformen möglich. Besonders bevorzugt ist es hierbei, dass die Ausnehmungen bezogen auf die Längsachse des Wälzlagers parallel zu dieser, d.h. im Wesentlichen axial verlaufen. Hierbei ist es möglich, dass beim Vorsehen eines Gehäusedeckels zunächst im Gehäuseelement oder dem Gehäusebauteil eine Ausnehmung zur Ausbildung der radialen Nut vorgesehen ist und ausgehend von der radialen Nut axial verlaufende, insbesondere die Längsachse des Lagers ringförmig umgebende Ausnehmungen vorgesehen sind. Eine entsprechend ausgebildete Haltehülse kann somit von außen eingesetzt werden. Sämtliche Spalte zwischen der Haltehülse und dem Gehäuseelement sowie dem Gehäusedeckel sind vorzugsweise mit einem gut wärmeleitfähigen Medium, Insbesondere Lagerfett, einer Wärmeleitpaste oder dergleichen gefüllt.

Bei einer weiteren bevorzugten Ausführungsform ist die Haltehülse als Anstellhülse ausgebildet. Dies ist dadurch realisiert, dass die Haltehülse nicht nur an dem äußeren Lagerring anliegt, sondern auch über ein Anstellelement wie eine Feder eine in axiale Richtung wirkende Kraft auf den Lageraußenring ausübt. Hierdurch erfolgt ein Anstellen bzw. Vorspannen des Wälzlagers. Als Anstellelement kann eine Feder vorgesehen sein, die vorzugsweise im Inneren der Haltehülse angeordnet ist.

Ferner ist es möglich die Haltehülse bzw. die Anstellhülse mit dem Lageraußenring einstückig auszubilden.

Ferner betrifft die Erfindung eine Vakuumpumpe, insbesondere eine Turbomolekularpumpe mit mindestens einer Vakuum-Wälzlageranordnung wie vorstehend beschrieben. Eine entsprechende Vakuumpumpe weist eine Rotorwelle auf, die ein Rotorelement trägt. Die Rotorwelle ist in einem Pumpengehäuse angeordnet und von einem Statorelement umgeben. Erfindungsgemäß ist die Rotorwelle von üblicherweise zwei Lageranordnungen getragen. Mindestens eine dieser Lageranordnung weist ein Wälzlager auf und ist, wie vorstehen beschrieben als erfindungsgemäße Vakuum-Wälzlageranordnung ausgebildet.

Nachfolgend wird die Erfindung anhand einer bevorzugten Ausführungsform unter Bezugnahme auf die anliegenden Zeichnungen näher erläutert.

Es zeigen:
- Figur 1: eine schematische Schnittansicht einer ersten Ausführungsform eines Teils einer Turbomolekularpumpe und
- Figur 2: eine schematische Schnittansicht einer zweiten Ausführungsform eines Teils einer Turbomolekularpumpe.

Die schematisch dargestellte Teil-Schnittansicht einer Turbomolekularpumpe weist eine Rotorwelle 10 auf, die ein Rotorelement 12 trägt. Das Rotorelement 12 weist einzelne sich radial nach außen erstreckende Rotorscheiben 14 auf. Zwischen den Rotorscheiben 14 sind Statorscheiben 16 angeordnet. Die Statorscheiben 16 sind über ringförmige Halteelemente 18 gehalten und in einem Pumpengehäuse 20 fixiert. Durch Rotation der Rotorwelle 10 um eine Längsachse 22 mittels eines nicht dargestellten Elektromotors wird ein zu förderndes Gas über einen nicht dargestellten Einlass angesaugt und in Richtung eines Pfeils 24 durch einen Pumpenauslass 26 ausgestoßen.

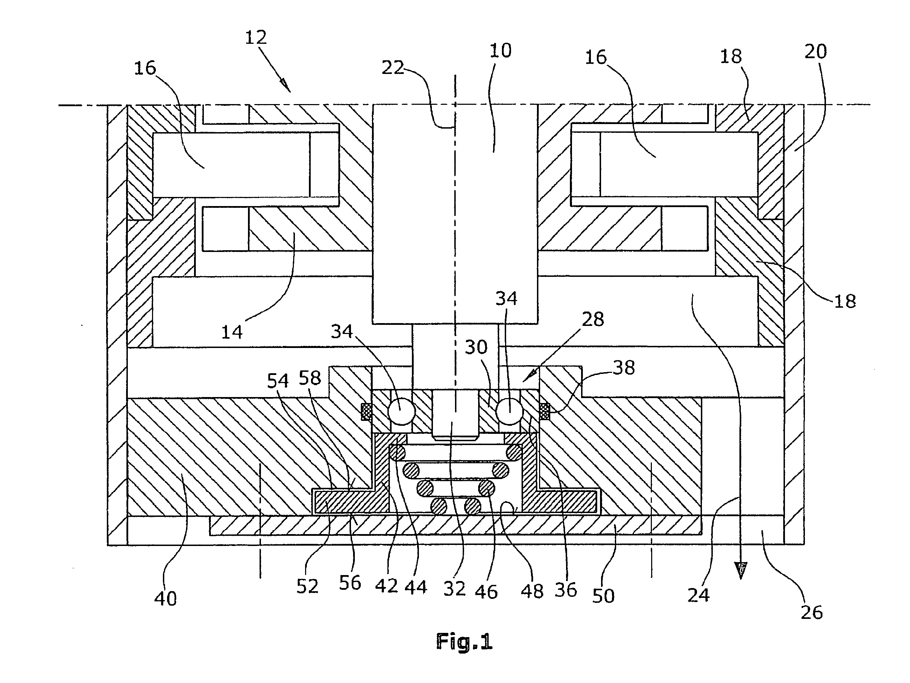

Die Rotorwelle 10 ist über zwei Lager gelagert, wobei in Figur 1 nur das üblicherweise untere Lager 28 sichtbar ist. Beim Lager 28 handelt es sich um ein Kugellager, wobei der Lagerinnenring 30 fest auf einen Wellenzapfen 32 aufgepresst ist. Die Wälzkörper 34 sind ferner von einem Lageraußenring 36 umgeben. Der Lageraußenring 36 ist über einen O-Ring 38 in radialer Richtung elastisch in einem Gehäuseelement 40 gehalten. An einer Außenseite des Lageraußenrings 36 liegt eine Haltehülse 42 an. Die im Wesentlichen zylindrisch ausgebildete Haltehülse 42 weist an ihrem in Richtung des Lagers 28 weisenden Ende einen radial nach innen weisenden, insbesondere ringförmig ausgebildeten Ansatz 44 auf. Ferner ist innerhalb der Haltehülse 42 ein Anstellelement in Form einer Feder 46 vorgesehen. Die Feder 46 stützt sich an einer Innenseite 48 eines Gehäusedeckels 50 ab. Über die Anstellfeder 46 wird somit eine in axiale Richtung wirkende Kraft auf den Lageraußenring 36 aufgebracht. Dies bewirkt ein Verschieben des Lageraußenrings 36 in axiale Richtung, d.h. in Figur 1 nach oben. Hierdurch erfolgt ein Vorspannen des Kugellagers 28.

Die Halte- bzw. Anstellhülse 42 weist einen sich im dargestellten Ausführungsbeispiel radial nach außen erstreckenden ringförmig ausgebildeten Ansatz 52 auf. Der Ansatz 52 ist im dargestellten Ausführungsbeispiel einstückig mit der Haltehülse 42 ausgebildet. Der Ansatz 52 ragt in eine in dem Gehäuseelement 40 ausgebildete Nut 54. Die Nut 54 ist durch eine Ausnehmung in dem Gehäuseelement 40 sowie durch einen Gehäusedeckel 50 ausgebildet. Durch den Ansatz 52 sind zumindest zwei zusätzliche Wärmeübertragungsflächen 56, 58 ausgebildet, wobei in dem Zwischenraum zwischen den Wärmeübertragungsflächen 56, 58 und der Nut 54 ein Wärmeübertragungsmedium wie Lagerfett, Wärmeleitpaste oder dergleichen vorgesehen ist. Eine zusätzliche Wärmeübertragung findet auch an der äußeren Stirnseite des Ansatzes 52 statt.

Zwischen den Wärmeübertragungsflächen 56, 58 und der Innenwand der Nut 54 ist ein den Ansatz 52 insbesondere umgebender Spalt bzw. Schlitz vorgesehen. Dieser kann mit Wärmeleitpasten oder dergleichen gefüllt sein. Die Vorspannung erfolgt bei der dargestellten erfindungsgemäßen Ausführungsform nicht unmittelbar über die Haltehülse 42 sondern über die Feder 46. Die Vorspannung des Lageraußenrings 36 ist somit durch die Feder 46 realisiert, die sich an dem inneren Ansatz 44 sowie an der Innenseite 48 des Gehäusedeckels 50 abstützt.

Aufgrund des Vorsehens eines Gehäusedeckels 50 ist eine einfache Montage möglich. So kann auf einfache Weise bei geöffnetem Gehäusedeckel 50 die Haltehülse 42 zusammen mit der Anstellfeder 46 eingesetzt werden.

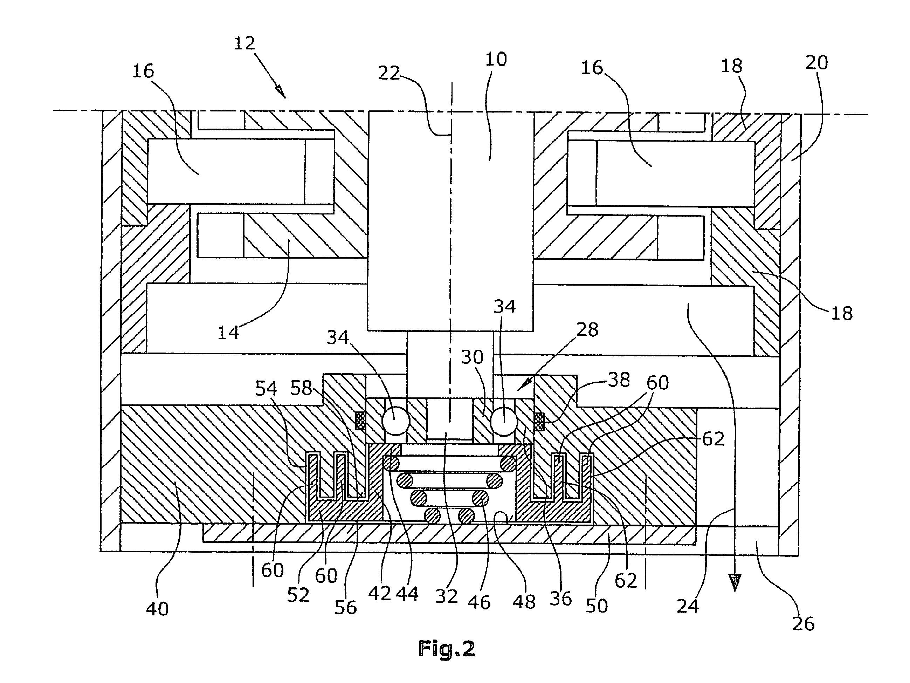

Bei der zweiten in Figur 2 dargestellten Ausführungsform sind ähnliche und identische Bauteile mit denselben Bezugszeichen gekennzeichnet.

Die zweite Ausführungsform unterscheidet sich in der Ausgestaltung der Haltehülse 42. Bei dieser Ausführungsform weist die Haltehülse 42 zusätzlich zu dem radial verlaufenden, insbesondere ringförmig ausgebildeten Ansatz 52 Fortsätze 60 auf. Die rippenartig ausgebildeten Fortsätze 60 verlaufen in axiale Richtung, d.h. parallel zur Längsachse 22. In der dargestellten bevorzugten Ausführungsform sind die Fortsätze 60 ringförmig ausgebildet und umgeben jeweils die Achse 22 bzw. den inneren Teil der Hülse 42. Die Fortsätze sind hierbei vorzugsweise koaxial.

Die Fortsätze 60 ragen in schlitzförmige Ausnehmungen 62, die in dem Gehäuseelement 40 angeordnet sind. Die Außenflächen der Fortsätze 60 dienen somit ebenfalls als Wärmeübertragungsflächen, wobei der Spalt wiederum mit einem Wärmeübertragungsmedium wie Lagerfett, Wärmeleitpaste und dergleichen gefüllt ist.

## Patentansprüche

1. Vakuum-Wälzlageranordnung, insbesondere für Vakuumpumpen,
mit einem einen Lageraußenring (36) aufweisenden Wälzlager (28) und
einer zwischen dem Lageraußenring (36) und einem Gehäuseelement (40, 50) angeordneten Haltehülse (42), die einen Ansatz (52) mit einer dem Gehäuseelement (40, 50) zugewandten, insbesondere an dem Gehäuseelement (40, 50) anliegenden Wärmeübertragungsfläche (58) aufweist,
**dadurch gekennzeichnet, dass**
der Ansatz (52) in eine Nut (54) ragt, so dass der Ansatz (52) zwei, insbesondere einander gegenüberliegende Wärmeübertragungsflächen (56, 58) aufweist, die beide zur Wärmeübertragung auf ein Gehäuseelement (40, 50) dienen.

2. Vakuum-Wälzlageranordnung nach Anspruch 1, **dadurch gekennzeichnet, dass** zwischen dem Ansatz (52) und einem Gehäuseelement (40, 50) ein vorzugsweise mit einem Wärmeübertragungsmedium gefüllter Spalt vorgesehen ist.

3. Vakuum-Wälzlageranordnung nach Anspruch 1 oder 2, **dadurch gekennzeichnet, dass** der Ansatz (52) radial angeordnet und/ oder ringförmig ausgebildet ist.

4. Vakuum-Wälzlageranordnung nach einem der Ansprüche 1 bis 3, **dadurch gekennzeichnet, dass** die Nut (54) durch einen Gehäusedeckel (50) und ein Gehäusebauteil (40) ausgebildet ist.

5. Vakuum-Wälzlageranordnung nach einem der Ansprüche 1 bis 4, **gekennzeichnet durch** mindestens einen mit dem Ansatz (52) verbundenen, insbesondere einstückig ausgebildeten Fortsatz (60), der zur Ausbildung mindestens einer zusätzlichen Wärmeübertragungsfläche in mindestens eine Ausnehmung (62) des Gehäuseelements (40, 50) ragt.

6. Vakuum-Wälzlageranordnung nach Anspruch 5, **dadurch gekennzeichnet, dass** der mindestens eine Fortsatz (60) im Wesentlichen axial angeordnet ist.

7. Vakuum-Wälzlageranordnung nach einem der Ansprüche 1 bis 6, **dadurch gekennzeichnet, dass** die Haltehülse (42) als Haltehülse für den Lageraußenring (36) ausgebildet ist und insbesondere mit einem Anstellelement (46) zusammenwirkt.

8. Vakuum-Wälzlageranordnung nach einem der Ansprüche 1 bis 7, **dadurch gekennzeichnet, dass** die Haltehülse (42) und der Lageraußenring (36) einstückig ausgebildet sind.

9. Vakuumpumpe, insbesondere Turbomolekularpumpe, mit
einer ein Rotorelement (12) tragenden Rotorwelle (10),
einem in einem Pumpgehäuse (20) angeordneten die Rotorwelle (10) umgebenden Statorelement (16) und
einer die Rotorwelle tragenden Lageranordnung (28, 42),
**dadurch gekennzeichnet, dass**
die Lageranordnung (28, 42) eine Wälzlageranordnung nach einem der Ansprüche 1 bis 8 aufweist.

## Claims

1. A vacuum rolling bearing arrangement, particularly for vacuum pumps, comprising
a rolling bearing (28) having an outer bearing ring (36), and
a holding sleeve (42) arranged between said outer bearing ring (36) and a housing member (40,50), said holding sleeve comprising a projection (52) having a heat transfer face (58) facing towards said housing member (40,50) and particularly being arranged in abutment on said housing member (40,50),
**characterized in that**
said projection (52) extends into a groove (54) so that the projection (52) comprises two heat transfer faces (56,58) which particularly are facing in opposite directions and which both serve for heat transfer to a housing member (40,50).

2. The vacuum rolling bearing arrangement according to claim 1, **characterized in that** a gap, preferably filled with a heat transfer medium, is provided between said projection (52) and a housing member (40,50).

3. The vacuum rolling bearing arrangement according to claim 1 or 2, **characterized in that** said projection (52) is arranged radially and/or has an annular shape.

4. The vacuum rolling bearing arrangement according to any one of claims 1 to 3, **characterized in that** said groove (54) is formed by a housing cover (50) and a housing member (40).

5. The vacuum rolling bearing arrangement according to any one of claims 1 to 4, **characterized by** at least one extension (60) which is connected to and particularly integrally formed to said projection (52), said extension projecting into at least one recess (62) of the housing member (40,60) for forming an additional heat transfer surface.

6. The vacuum rolling bearing arrangement according to claim 5, **characterized in that** said at least one extension (60) is arranged substantially axially.

7. The vacuum rolling bearing arrangement according to any one of claims 1 to 6, **characterized in that** said holding sleeve (42) is formed as a holding sleeve for said outer bearing ring (36) and particularly cooperates with a press-on placement member (46).

8. The vacuum rolling bearing arrangement according to any one of claims 1 to 7, **characterized in that** said holding sleeve (42) and said outer bearing ring (36) are formed as one piece.

9. A vacuum pump, particularly a turbomolecular pump, comprising
a rotor shaft (10) carrying a rotor member (12),
a stator member (16) arranged in a pump housing (20) and surrounding said rotor shaft (10), and
a bearing arrangement (28,42) carrying the rotor shaft,
**characterized in that**
said bearing arrangement (28,42) comprises a rolling bearing arrangement according to any one of claims 1 to 8.

## Revendications

1. Ensemble palier à roulement sous vide, en particulier pour pompes à vide,
comprenant un palier à roulement (28) qui présente une bague extérieure de palier (36) et
une douille de retenue (42) disposée entre la bague extérieure de palier (36) et un élément de carter (40, 50), et comprenant une saillie (52) qui présente une surface de transmission de chaleur (58) orientée vers l'élément de carter, (40, 50) et en particulier reposant contre l'élément de carter (40, 50),
**caractérisé en ce que**
la saillie (52) s'engage dans une rainure (54) de telle manière que la saillie (52) présente deux surfaces de transmission de chaleur (56, 58), en particulier mutuellement opposées, qui servent toutes deux à transmettre de la chaleur à un élément de carter (40, 50).

2. Ensemble palier à roulement sous vide selon la revendication 1, **caractérisé en ce qu'**entre la saillie (52) et un élément de carter (40, 50) est prévue une fente qui est de préférence remplie d'un milieu de transmission de chaleur.

3. Ensemble palier à roulement sous vide selon la revendication 1 ou 2, **caractérisé en ce que** la saillie (52) est disposé radialement et/ou est de forme annulaire.

4. Ensemble palier à roulement sous vide selon l'une des revendications 1 à 3, **caractérisé en ce que** la rainure (54) est formée par un capot de carter (50) et par un élément de carter (40).

5. Ensemble palier à roulement sous vide selon l'une des revendications 1 à 4, **caractérisé par** au moins un prolongement (60) relié à la saillie (52), en particulier réalisé en une seule pièce avec la saillie, et qui s'engage dans au moins un évidement (62) de l'élément de carter (40, 50) afin de former au moins une surface de transmission de chaleur supplémentaire.

6. Ensemble palier à roulement sous vide selon la revendication 5, **caractérisé en ce que** le prolongement (60), au moins au nombre de un, est disposé sensiblement axialement.

7. Ensemble palier à roulement sous vide selon l'une des revendications 1 à 6, **caractérisé en ce que** la douille de retenue (42) est exécutée en tant que douille de retenue de la bague extérieure de palier (36) et coopère en particulier avec un élément de réglage (46).

8. Ensemble palier à roulement sous vide selon l'une des revendications 1 à 7, **caractérisé en ce que** la douille de retenue (42) et la bague extérieure de palier (36) sont réalisées en une seule pièce.

9. Pompe à vide, en particulier pompe turbomoléculaire, comprenant un arbre de rotor (10) qui porte un élément rotor (12),
un élément stator (16) disposé dans un carter de pompe (20) et entourant l'arbre de rotor (10) et
un ensemble palier (28, 42) qui porte l'arbre de rotor,
**caractérisée en ce que** l'ensemble palier (28, 42) présente un ensemble palier à roulement selon l'une des revendications 1 à 8.
